# EUROPÄISCHE PATENTSCHRIFT

(11) **EP 4 473 883 B1**
(45) Veröffentlichungstag und Bekanntmachung des Hinweises auf die Patenterteilung: **09.09.2026**
(21) Anmeldenummer: 24175987.7
(22) Anmeldetag: 15.05.2024
(51) Int. Cl.: A47J 45/07, A47J 27/21, A47J 45/06

(54) **KOCHGESCHIRR**
COOKWARE
USTENSILE DE CUISSON

(30) Priorität: 07.06.2023 BE 202305474
(43) Veröffentlichungstag der Anmeldung: 11.12.2024
(73) Patentinhaber: Miele & Cie. KG, 33332 Gütersloh (DE)
(72) Erfinder: Müller, Christoph, 32289 Rödinghausen (DE)

(56) Entgegenhaltungen:
- EP-B1- 3 020 313
- US-A1- 2015 208 845
- US-B2- 9 955 529

## Beschreibung

Die vorliegende Erfindung betrifft ein Kochgeschirr umfassend wenigstens einen Kochgeschirrgrundkörper und wenigstens eine Griffeinrichtung mit wenigstens einem Griffkörper, wobei die Griffeinrichtung wenigstens abschnittsweise an dem Kochgeschirrgrundkörper aufgenommen ist, wobei der Kochgeschirrgrundkörper wenigstens einen Boden und wenigstens eine Wandung umfasst und wobei durch den Boden und die Wandung wenigstens ein Aufnahmevolumen begrenzt wird.

Beim modernen Kochen soll ein Benutzer einen Garprozess möglichst komfortabel steuern können und vorzugsweise auch durch Assistenzfunktionen bzw. Automatikprogramme unterstützt werden.

Modernes Kochgeschirr kann dazu je nach Ausgestaltung elektronische Baugruppen wie z. B. Auswerte-, Steuer-, Signal-, Bedien- und/oder Sensoreinheiten umfassen, welche einen Benutzer bei der Zubereitung von Nahrungsmitteln und/oder Speisen unterstützen. So gibt es beispielsweise modernes Kochgeschirr, bei welchem eine Auswerteeinheit ein Signal z. B. einer sensorischen Komponente auswertet, um so einen Kochvorgang zu überwachen und/oder um einem Benutzer beim Erreichen eines gewünschten Garergebnisses behilflich zu sein oder dieses sogar erst zu ermöglichen.

Kochgeschirr mit einer elektronischen Baugruppe zeigen die Druckschriften EP 3 020 313 A1 und US 2015 208 845 A1 sowie US 9 955 529 B2.

Häufig wird jedoch eine bestimmungsgemäße Funktionsweise der elektronischen Baugruppen solcher moderner Kochgeschirre direkt und/oder indirekt durch äußere Störeinflüsse, wie z. B elektrische und/oder magnetische Felder, Wärmestrahlung und/oder Temperaturgradienten, negativ beeinträchtigt, beeinflusst und/oder sogar gestört. So kann insbesondere ein von einer Induktionsspule eines Kochfeldes während eines Kochprozesses bereitgestelltes elektromagnetisches Feld die bestimmungsgemäße Funktionsweise und/oder Funktionsfähigkeit der elektronischen Baugruppen negativ beeinträchtigt.

Üblicherweise umfasst bekanntes modernes Kochgeschirr wenigstens eine Abschirmeinheit, welche die elektronische Baugruppe wenigstens teilweise und/oder wenigsten abschnittsweise gegen elektromagnetische Störeinflüsse abschirmt. Nachteilig ist jedoch, dass solche Abschirmeinheiten bekannter moderner Kochgeschirre häufig keinen zuverlässigen und/oder zufriedenstellenden Schutz vor Wechselwirkungen der elektronischen Baugruppe mit elektromagnetischen Störeinflüssen bereitstellen. Auch weisen solche Abschirmeinheiten regelmäßig kein optisch ansprechendes Design auf und/oder lassen bekanntes modernes Kochgeschirr für einen Benutzer als optisch wenig ansprechend, insbesondere klobig, erscheinen.

Ein Kochgeschirr umfassend wenigstens einen Kochgeschirrgrundkörper und eine Griffeinrichtung mit einem Griffkörper, wobei die Griffeinrichtung an dem Kochgeschirrgrundkörper aufgenommen ist, wobei der Kochgeschirrgrundkörper einen Boden und eine Wandung umfasst und wobei durch den Boden und die Wandung ein Aufnahmevolumen begrenzt wird, wobei ein Abschirmkörper umfasst ist, welcher in dem Griffkörper eingefasst ist und welcher eine in dem Abschirmkörper angeordnete elektronische Baugruppe elektromagnetischen Störeinflüssen abschirmt, wobei die Griffeinrichtung eine Auswerteeinrichtung umfasst, ist beispielsweise aus der Druckschrift EP 3 020 313 A1 bekannt.

Es ist daher die Aufgabe der vorliegenden Erfindung, ein Kochgeschirr mit wenigstens einer elektronischen Baugruppe zur Verfügung zu stellen, welches eine zuverlässige Funktionsweise der elektronischen Baugruppe ermöglicht und/oder ein optisch ansprechendes Design aufweist. Diese Aufgabe wird gelöst durch ein Kochgeschirr mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Kochgeschirrgrundkörper und wenigstens eine Griffeinrichtung mit wenigstens einem Griffkörper, wobei die Griffeinrichtung wenigstens abschnittsweise an dem Kochgeschirrgrundkörper aufgenommen ist. Der Kochgeschirrgrundkörper umfasst wenigstens einen Boden und wenigstens eine Wandung, wobei durch den Boden und die Wandung wenigstens ein Aufnahmevolumen begrenzt wird. Dabei ist wenigstens ein Abschirmkörper umfasst, welcher wenigstens abschnittsweise in und/oder von dem Griffkörper eingefasst ist und welcher wenigstens eine in dem Abschirmkörper angeordnete elektronische Baugruppe im Wesentlichen vor elektromagnetischen Störeinflüssen abschirmt.

Vorzugsweise ist der Abschirmkörper wenigstens abschnittsweise von dem Griffkörper eingerahmt, umschlossen, umfasst und/oder umgriffen. Bevorzugt ist der Abschirmkörper wenigstens abschnittsweise in dem bzw. in den Griffkörper eingebettet und/oder wenigstens abschnittsweise in dem Griffträger angeordnet.

Dabei sind unter elektromagnetischen Störeinflüssen insbesondere Einflüsse und/oder Wechselwirkungen zu verstehen, welche eine bestimmungsgemäße Funktionsweise und/oder eine Funktionsfähigkeit der elektrischen Baugruppe negativ beeinträchtigenden und/oder beeinflussenden. Vorzugsweise werden Störeinflüssen durch, insbesondere externen, elektrische, magnetische und/oder elektromagnetische Felder bereitgestellt. In vorteilhaften Weiterbildungen schirmt der Abschirmkörper die elektronische Baugruppe im Wesentlichen vor, insbesondere von einer Induktionsspule bereitgestellten, elektromagnetischen Feldern ab. Insbesondere ist der Abschirmkörper dazu geeignet und ausgebildet, die elektronische Baugruppe von unten und/oder von der Seite gegen elektromagnetische Störeinflüsse abzuschirmen. Je nach Aufgabe und Ausführung kann der Abschirmkörper auch dazu geeignet und ausgebildet, die elektronische Baugruppe gegen elektromagnetische Störeinflüsse von oben abzuschirmen.

In zweckmäßigen Weiterbildungen wird der Griffkörper von einem Griffgrundgerüst, einem Griffträger und/oder einer Griffbasis, insbesondere zur Aufnahme und/oder Befestigung wenigstens eines Abdeckelementes, bereitgestellt.

Vorzugsweise ist der Abschirmkörper als eine Abschirmschale, ein Abschirmgehäuse und/oder eine ähnlich geeignete Einrichtung ausgebildet.

In vorteilhaften Weiterbildungen ist der Griffkörper, insbesondere die Griffeinrichtung, wenigstens abschnittsweise mit dem Kochgeschirrgrundkörper, vorzugsweise einer Außenseite der Wandung des Kochgeschirrs, insbesondere mittels wenigstens einer Verschweißung, verbunden. Je nach Aufgabe und Ausgestaltung können der Griffkörper und der Kochgeschirrgrundkörper, insbesondere die Griffeinrichtung und der Kochgeschirrgrundkörper, auch mittels einer Verschraubung, Nietung, Lötung, Verklebung und/oder dergleichen miteinander verbunden sein.

In zweckmäßigen Weiterbildungen ist das Kochgeschirr als eine Pfanne, ein Topf, ein Bräter, eine Schüssel, ein Wasserkocher und/oder dergleichen ausgebildet.

Die vorliegende Erfindung bietet viele Vorteile. Ein erheblicher Vorteil ist, dass wenigstens ein Abschirmkörper umfasst ist, welcher wenigstens abschnittsweise in und/oder von dem Griffkörper eingefasst ist und welcher wenigstens eine in dem Abschirmkörper angeordnete elektronische Baugruppe im Wesentlichen vor elektromagnetischen Störeinflüssen abschirmt.

Dadurch, dass eine elektronische Baugruppe wenigstens abschnittsweise in einem Abschirmkörper angeordnet, welcher die elektronische Baugruppe im Wesentlichen vor elektromagnetischen Störeinflüssen abschirmt, wird die elektronische Baugruppe zuverlässig und/oder zufriedenstellend vor elektromagnetischen Störeinflüssen, insbesondere vor Wechselwirkungen mit einem von einer Induktionsspule eines Kochfeldes bereitgestellten elektromagnetischen Feld, geschützt. Insbesondere wird hierdurch eine bestimmungsgemäße Funktionsweise der elektronischen Baugruppe im Wesentlichen nicht durch direkte und/oder indirekte äußere Störeinflüsse, wie z. B elektrische und/oder magnetische Felder, Wärmestrahlung und/oder Temperaturgradienten, negativ beeinträchtigt, beeinflusst und/oder sogar gestört.

Hierdurch kann das Kochgeschirr besonders zuverlässig, insbesondere während eines Kochprozesses, betrieben und/oder verwendet werden.

Auch kann das Kochgeschirr hierdurch besonders zuverlässig wenigstens eine oder auch eine Vielzahl von Funktionen einem Benutzer bereitstellen, welche einen Benutzer bei der Zubereitung von Nahrungsmitteln und/oder Speisen unterstützen.

Des Weiteren wird dadurch, dass der Abschirmkörper wenigstens abschnittsweise in und/oder von dem Griffkörper eingefasst ist, ein optisch besonders ansprechendes Design des Kochgeschirrs ermöglicht. So kann eine von einem Benutzer oft als optisch wenig ansprechende empfundener Abschirmkörper z. B. im Wesentlichen nicht und/oder nur abschnittsweise sichtbar von und/oder an dem Kochgeschirr aufgenommen sein. Eine oft aufwendige und/oder kostenintensive optisch ansprechende Ausgestaltung des Abschirmkörpers, welcher regelmäßig bei bekanntem Kochgeschirr an einer Außenseite und/oder einsehbar angeordnete ist, ist im Wesentlichen nicht nötig.

Auch wird bei einer wenigstes abschnittsweise in und/oder von dem Griffkörper eingefassten Anordnung des Abschirmkörpers mit wenigstens einer elektronischen Baugruppe die elektronische Baugruppe noch zuverlässiger gegen elektromagnetische Störeinflüsse geschützt.

Bevorzugt ist der Abschirmkörper wenigstens abschnittsweise aus Aluminium ausgebildet. Hierdurch schirmt der Abschirmkörper wenigstens die elektronische Baugruppe besonders zuverlässig vor elektromagnetischen Störeinflüssen ab. Auch ist hierdurch der Abschirmkörper besonders leicht und/oder besonders kostengünstig bereitstellbar.

Dabei ist unter Aluminium insbesondere eine Aluminiumlegierung und/oder aluminiumhaltige Legierung, vorzugsweise mit Aluminium als Hauptkomponente, zu verstehen.

Besonders bevorzugt umfasst der Abschirmkörper wenigstens eine Wandung, welche wenigstens abschnittsweise eine Dicke von wenigstens 0,7 mm aufweist. Hierdurch schirmt der Abschirmkörper wenigstens die elektronische Baugruppe besonders zuverlässig vor elektromagnetischen Störeinflüssen ab.

Vorzugsweise weist wenigstens eine Wandung wenigstens abschnittsweise eine Dicke von wenigstens 0,6 mm oder 0,7 mm, insbesondere von wenigstens 0,75 mm oder 0,8 mm, bevorzugt von wenigstens 0,85 mm oder 0,9 mm, besonders bevorzugt von 0,95 mm oder noch mehr auf. Bevorzugt weist die Wandung eine Dicke bzw. Wandstärke im Bereich von 0,4 mm bis 0,8 mm, vorzugsweise von 0,5 bis 0,75 mm auf.

In vorteilhafte Weiterbildungen weisen alle Wandungen des Abschirmkörpers eine Dicke von wenigstens 0,7 mm auf. Bevorzugt die Wandungen des Abschirmkörpers eine Dicke bzw. Wandstärke im Bereich von 0,4 bis 0,8 mm, vorzugsweise von 0,5 bis 0,8 mm auf.

In zweckmäßigen Weiterbildungen ist der Abschirmkörper wenigstens abschnittsweise schalenförmig ausgebildet und/oder weist einen im Wesentlichen U-förmig ausgeformten, insbesondere horizontalen und/oder vertikalen, Querschnitt auf. Hierdurch ist die elektronische Baugruppe besonders zuverlässig wenigstens abschnittsweise in dem Abschirmkörper anordenbar. Auch ist ein so ausgeformter Abschirmkörper besonders platzsparend ausgebildet und ist somit, insbesondere unter Beanspruchung eines geringes oder sogar sehr geringes Einbauvolumens abschnittsweise in und/oder von dem Griffkörper einfassbar.

Je nach Aufgabe und Ausbildung kann der Querschnitt des Abschirmkörpers auch rechteckig, rund und/oder andersförmig ausgeformt sein.

Besonders bevorzugt ist der Abschirmkörper wenigstens in einem Randabschnitt im Wesentlichen um 90° abgekantet. Hierdurch schirmt der Abschirmkörper besonders zuverlässig die elektronische Baugruppe gegen elektromagnetische Störeinflüsse von der Seite und/oder von oben ab.

Vorzugsweise ist der Abschirmkörper wenigstens in einem Randabschnitt im Wesentlichen um einen Winkel im Bereich von 75° bis 105°, insbesondere um einen Winkel im Bereich von 80° bis 100°, bevorzugt um einen Winkel im Bereich von 85° bis 95°, abgekantet.

Insbesondere weist der Abschirmkörper in einem Randabschnitt eine im Wesentlichen scharfe und/oder nicht abgerundete Kante auf.

Bevorzugt stellt der Abschirmkörper wenigstens ein Abschirmgehäuse bereit, welches die elektronische Baugruppe im Wesentlichen umschließt.

Vorzugsweise ist, insbesondere ein als Abschirmgehäuse ausgebildeter, Abschirmkörper wenigstens zweiteilig ausgebildet und umfasst wenigstens zwei wenigstens zeitweise separierbare/trennbare Abschirmgehäuseelemente.

In zweckmäßigen Weiterbildungen ist jedes der wenigstens zwei Abschirmgehäuseelemente in einem Randabschnitt wenigstens abschnittsweise so abgekantet, dass die wenigstens zwei Abschirmgehäuseelemente in einer Einbaulage wenigstens abschnittsweise eine gemeinsame Kontaktfläche ausbilden können.

In vorteilhaften Weiterbildungen bilden die wenigstens zwei Abschirmgehäuseelemente in einer Einbaulage wenigstens abschnittsweise einen flächigen Kontakt miteinander aus.

Vorzugsweise stellen die wenigstens zwei Abschirmgehäuseelemente in einer Einbaulage das Abschirmgehäuse bereit. Vorzugsweise umschließen/umhüllen die wenigstens zwei Abschirmgehäuseelemente in einer Einbaulage die elektronische Baugruppe wenigstens abschnittsweise, insbesondere gänzlich, sodass sie die elektronische Baugruppe im Wesentlichen vor elektromagnetischen Störeinflüssen abschirmen.

Besonders bevorzugt ist der Abschirmkörper dazu geeignet und ausgebildet, die elektronische Baugruppe wenigstens zeitweise im Wesentlichen vor einer Erwärmung abzuschirmen.

Vorzugsweise ist der Abschirmkörper dazu geeignet und ausgebildet, die elektronische Baugruppe wenigstens zeitweise im Wesentlichen vor einer Erwärmung, insbesondere durch ein elektromagnetisches Feld, zu schützen und/oder wenigstens zeitweise eine Erwärmung der elektronischen Baugruppe zu verringern, zu verlangsamen oder im Wesentlichen gänzlich zu vermeiden, sodass insbesondere eine vorzeitige Alterung der elektronischen Baugruppe im Wesentlichen vermieden wird.

In zweckmäßigen Weiterbildungen umfasst die Griffeinrichtung wenigstens ein Abdeckelement zum Greifen des Kochgeschirrs durch einen Benutzer, welches wenigstens abschnittsweise den Griffkörper, insbesondere den Abschirmkörper, abdeckt und/oder ummantelt. Hierdurch ist das Kochgeschirr besonders benutzerfreundlich und/oder weist ein optisch besonders ansprechendes Design auf.

Insbesondere wird ein Abdeckelement von wenigstens einer Griffschale und/oder einer Griffummantelung bereitgestellt, welche vorzugsweise den Griffkörper wenigstens abschnittsweise umschließt und/oder umgreift.

Vorzugsweise ist der Abschirmkörper, insbesondere der Griffkörper, im Wesentlichen gänzlich von der Abdeckelement abdeckt, umschlossen und/oder ummantelt.

In zweckmäßigen Weiterbildungen ist das Abdeckelement aus einem Kunststoff, insbesondere einem Polymer, und/oder einer Keramik ausgebildet. Je nach Aufgabe und Ausbildung kann das Abdeckelement auch von einem anderen Material bereitgestellt werden.

Vorzugsweise ist das Abdeckelement wenigstens abschnittsweise mit dem Griffkörper und/oder wenigstens abschnittsweise um den Griffkörper verschweißt, verpresst, verschraubt und/oder verklebt. Vorzugsweise ist das Abdeckelement wenigstens abschnittsweise an dem Griffkörper aufgenommen.

Bevorzugt weist der Griffkörper wenigstens abschnittsweise eine thermische Leitfähigkeit auf, welche im Wesentlichen gleich oder kleiner ist, als die thermische Leitfähigkeit von Edelstahl. Hierdurch wird ein Erwärmen des Griffkörpers, insbesondere während eines Kochprozess bzw. während einem Kochen mit dem Kochgeschirr, zuverlässig verringert oder sogar im Wesentlichen gänzlich vermieden.

Vorzugsweise wird der Griffkörper wenigstens abschnittsweise von einem Material mit einer thermischen Leitfähigkeit bereitgestellt, welche gleich oder kleinere als die thermische Leitfähigkeit von Edelstahl ist.

Je nach Aufgabe und Ausbildung kann der Griffkörper auch eine thermische Leitfähigkeit aufweisen, welche gleich oder größerer ist, als die thermische Leitfähigkeit von Edelstahl.

Besonders bevorzugt stehen der Griffkörper und der Abschirmkörper wenigstens abschnittsweise elektrisch leitend miteinander in Kontakt. Hierdurch schirmt der Abschirmkörper die elektronische Baugruppe besonders zuverlässig vor elektromagnetischen Störeinflüssen ab.

Vorzugsweise sind der Griffkörper und der Abschirmkörper wenigstens abschnittsweise elektrisch leitend miteinander verbunden.

Insbesondere wird bei einem ummanteln des Griffkörpers mit dem Abdeckelement eine Kraft so auf der Abschirmkörper und/oder den Griffkörper ausgeübt, dass der Griffkörper und der Abschirmkörper wenigstens abschnittsweise in einen elektrisch leitenden Kontakt miteinander überführt werden.

Vorzugsweise stehen der Griffkörper und der Abschirmkörper wenigstens abschnittsweise thermisch leitend miteinander in Kontakt. Hierdurch kann besonders zuverlässig eine Erwärmung des Abschirmkörpers, insbesondere der elektronischen Baugruppe, verringert oder sogar im Wesentlichen vermieden werden.

In zweckmäßigen Weiterbildungen stehen der Griffkörper und der Abschirmkörper wenigstens abschnittsweise mittels wenigstens einem, insbesondere elektrisch leitfähigen, Dichtelement miteinander in Kontakt.

Dabei wird das Dichtelement vorzugsweise von einem Hochfrequenzdichtelemente, insbesondere HF-Dichtband, bereitgestellt. Vorzugsweise ist das Dichtelement wenigstens abschnittsweise dazu geeignet und/ausgebildet, ein elektromagnetisches Feld wenigstens teilweise abzuschirmen und/oder Feuchtigkeit abzuweisen.

Besonders bevorzugt umfasst die Griffeinrichtung wenigstens eine Kommunikationseinrichtung und/oder wenigstens eine Signaleinrichtung und/oder wenigstens ein Bedienelement. Hierdurch ist das Kochgeschirr besonders benutzerfreundlich.

Dabei ist eine Kommunikationseinrichtung vorzugsweise dazu geeignet und ausgebildet, wenigstens ein Signal mittels einer WLAN-, Bluetooth-, ZigBee-, NFC und/oder ähnlich geeigneten Kommunikationsverbindung zu empfangen und/oder zu senden.

Dabei ist eine Signaleinrichtung insbesondere eine optische, akustische und/oder haptische Signaleinrichtung zur Anzeige wenigstens einer Information. Vorzugsweise stellt die Signaleinrichtung wenigstens abschnittsweise eine Anzeigeeinrichtung, insbesondere mit wenigstens einer LED oder dergleichen, bereit.

Dabei ist ein Bedienelement insbesondere ein Dreh- und/oder Druckknopf, Schalter und/oder dergleichen zur Bedingung und/oder Steuerung wenigstens einer Funktion und/oder eines Kochprogrammes durch einen Benutzer.

In vorteilhaften Weiterbildungen ist wenigstens eine Sensoreinrichtung umfasst, welche wenigstens zeitweise in Signalverbindung mit der elektronischen Baugruppe steht. Hierdurch ist das Kochgeschirr besonders benutzerfreundlich.

Bevorzugt ist die Sensoreinrichtung dazu geeignet und ausgebildet, wenigstens einen Wert, ein Signal und/oder eine Information zu ermittelt, welche vorzugsweise für einen Benutzer bei einem Kochvorgang bzw. Kochprozess nützlich ist und/oder einen Benutzer unterstützt.

Erfindungsgemäß umfasst die Griffeinrichtung wenigstens ein Batterieelement und/oder wenigstens eine Auswerteeinrichtung.

Dabei wird das Batterieelement vorzugsweise von einem, insbesondere wieder aufladbaren, Akkuelement oder dergleichen bereitgestellt. Vorzugsweise dient das Batterieelement zu Speicherung von elektrischer Energie.

Erfindungsgemäß umfasst die elektronische Baugruppe wenigstens abschnittsweise und/oder wenigstens teilweise das Batterieelement und/oder die Auswerteeinrichtung. Hierdurch kann ein von der Griffeinrichtung umfasstes Batterieelement und/oder die Auswerteeinrichtung z. B. zuverlässig gegen Wechselwirkungen mit elektromagnetischen Störeinflüssen und/oder gegen eine Erwärmung geschützt werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung eines Ausführungsbeispiels eines erfindungsgemäßen Kochgeschirrs in einer perspektivischen Ansicht;
- Figur 2: eine rein schematische Darstellung eines Ausführungsbeispiels eines Abschirmkörpers für ein erfindungsgemäßes Kochgeschirr in einer perspektivischen Ansicht; und
- Figur 3: rein schematische Darstellungen von Ausführungsbeispielen von Abschirmkörpern für ein erfindungsgemäßes Kochgeschirr in einer Schnittansicht von der Seite.

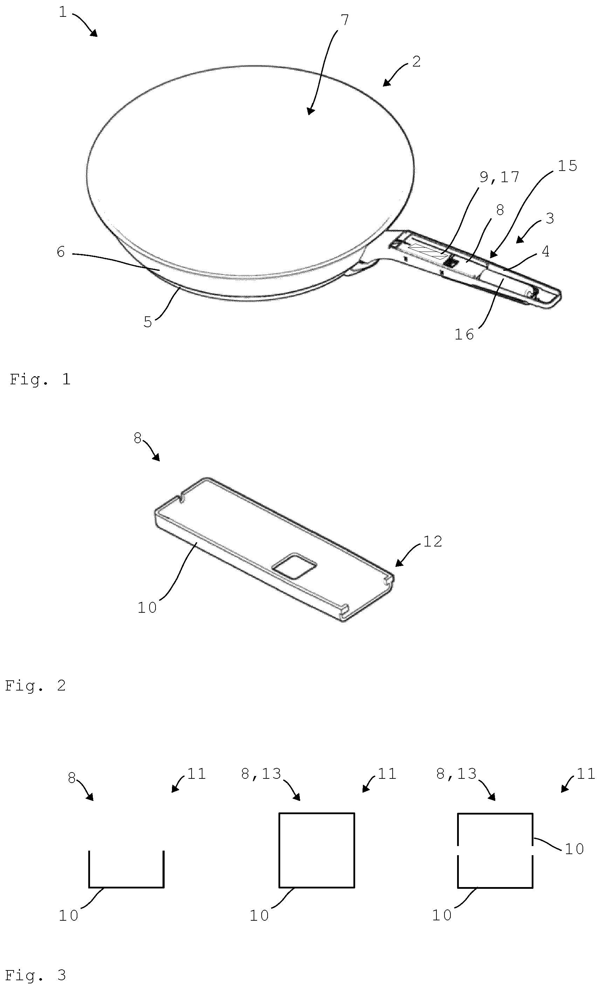

In Figur 1 ist rein schematisch ein Ausführungsbeispiel eines erfindungsgemäßen Kochgeschirrs 1 in einer perspektivischen Ansicht dargestellt.

In dem hier dargestellten Ausführungsbeispiel ist das Kochgeschirr 1 als eine Pfanne ausgeführt und umfasst hier einen Kochgeschirrgrundkörper 2 und eine Griffeinrichtung 3.

Der Kochgeschirrgrundkörper 2 weist hier eine Wandung 6 und einen Boden 5 auf, wobei hier die Wandung 6 und der Boden 5 ein Aufnahmevolumen 7 abschnittsweise begrenzen. Je nach Aufgabe und Ausführung kann der Kochgeschirrgrundkörper 2 optional auch eine Sensoreinrichtung aufweisen, welche z. B. wenigstens einen der Wandung 6 und/oder dem Boden 5 zugeordnetes Sensorelement, insbesondere ein Temperatursensorelement, umfasst.

In dem hier dargestellten Ausführungsbeispiel weist die Griffeinrichtung 3 einen Griffkörper 4, einen Abschirmkörper 8 und eine elektronische Baugruppe 10 auf. Dabei ist hier der Griffkörper 4 der Griffeinrichtung 3 an einer Außenseite der Wandung 6 des Kochgeschirrgrundkörpers 2 aufgenommen. Je nach Aufgabe und Ausführung kann die Griffeinrichtung 3 und/oder der Griffkörper 4 auch an einer anderen Position des Kochgeschirrgrundkörpers 2 aufgenommen sein.

Der Griffkörper 4 ist hier aus einer Aluminiumlegierung ausgeführt und weist hier eine thermische Leitfähigkeit auf, welche kleiner ist, als die thermische Leitfähigkeit von Edelstahl. Je nach Aufgabe und Ausführung kann der Griffkörper 4 auch von einem Material mit einer thermischen Leitfähigkeit bereitgestellt werden, welche gleich oder größer ist, als die thermische Leitfähigkeit von Edelstahl.

In dem hier dargestellten Ausführungsbeispiel ist der Abschnittskörper 8 im Wesentlichen schalenförmig als eine Abschirmschale ausgeführt in der hier die elektronische Baugruppe 9 angeordnete. Je nach Aufgabe und Ausführung kann der Abschnittskörper 8 auch ein Abschirmgehäuse 13 bereitstellen, welches die elektronische Baugruppe 9 im Wesentlichen umschließt.

Der Abschirmkörper 8 ist hier dazu geeignet und ausgeführt, die hier in dem Abschirmkörper 8 angeordnete elektronische Baugruppe 9 im Wesentlichen vor elektromagnetischen Störeinflüssen abzuschirmen. So schirmt z. B. hier der Abschirmkörper 8 die hier in dem Abschirmkörper 8 angeordnete elektronische Baugruppe 9 gegen Wechselwirkungen mit elektromagnetischen Feldern ab, welche hier eine bestimmungsgemäße Funktionsweise der elektronischen Baugruppe 9 negativ beeinflussen oder sogar stören können. Solche elektromagnetischen Felder werden regelmäßig von einer Induktionsspule einer Kochfeldeinrichtung während eines Kochprozesses bzw. während des Kochens bereitgestellt.

In dem hier dargestellten Ausführungsbeispiel ist der Abschirmkörper 8 auch dazu geeignet und ausgeführt, die elektronische Baugruppe 9 vor einer Erwärmung durch z. B. eine Wärmestrahlung und/oder einen Wärmeeintrag über den Griffkörper 4 abzuschirmen.

Der Abschirmkörper 8 ist hier abschnittsweise von dem Griffkörper 4 so eingefasst, dass der Abschirmkörper hier im Wesentlichen in den Griffkörper 4 eingebettet ist. Dabei stehen hier der Abschirmkörper 8 und der Griffkörper 4 abschnittsweise mittels eines elektrisch leitfähigen Dichtelementes 15 miteinander in Kontakt, sodass hier elektrische Ladungen von dem Abschirmkörper 8 über das Dichtelementes 15 zum Griffkörper 4 ableitbar sind. Je nach Aufgabe und Ausführung kann der Abschirmkörper 8 auch abschnittsweise in und/oder von dem Griffkörper 4 eingerahmt, umschlossen und/oder umgriffen sein.

Die elektronische Baugruppe 9 stellt hier eine Auswerteeinrichtung 17, mittels welcher hier z. B. ein von einer Sensoreinrichtung ermitteltes Signal auswertbar ist.

In dem hier dargestellten Ausführungsbeispiel umfasst die Griffeinrichtung 3 ein Batterieelement 16, welche hier an einem Endabschnitt des Griffkörpers 4 aufgenommen ist. Je nach Aufgabe und Ausführung kann die Griffeinrichtung 3 auch optional wenigstens eine Kommunikationseinrichtung, wenigstens eine Signaleinrichtung und/oder wenigstens ein Bedienelement umfassen.

Die Griffeinrichtung 3 der hier rein schematisch dargestellten Ausführung eines erfindungsgemäßen Kochgeschirrs 1 wird für gewöhnlich mittels eines hier nicht näher dargestellten Abdeckelementes zum Greifen des Kochgeschirrs 1 durch einen Benutzer abdeckt und/oder ummantelt.

In Figur 2 ist rein schematisch ein Ausführungsbeispiel eines Abschirmkörpers 8 für ein erfindungsgemäßes Kochgeschirr 1 in einer perspektivischen Ansicht dargestellt.

Wie in Figur 1 weist hier der Abschirmkörper 8 eine im Wesentlichen schalenförmige Form auf und hier dazu geeignet und ausgeführt, eine in dem Abschirmkörper 8 angeordnete elektronische Baugruppe 9 im Wesentlichen vor elektromagnetischen Störeinflüssen abzuschirmen. Dabei umfasst der Abschirmkörper 8 hier eine Wandung 10, welche hier eine Dicke von 0,75 mm aufweist, sodass hier der Abschirmkörper 8 besonders zuverlässig eine in dem Abschirmkörper 8 angeordnete elektronische Baugruppe 9 gegen elektromagnetischen Störeinflüssen abschirmen kann.

Der hier rein schematisch dargestellte Abschirmkörper 8 wird für gewöhnlich so angeordnet, dass ein Griffkörper 4 eines Kochgeschirres 1 den Abschirmkörper 8 wenigstens abschnittsweise in einfasst. Dabei wird der Abschirmkörper 8 in der Regel in der hier rein schematisch dargestellten Orientierung mit einer nach unten ausgerichteten Wandung an dem Griffkörper 4 angeordnet, sodass der Abschirmkörper 8 eine im Abschirmkörper 8 angeordnete elektronische Baugruppe 9 wenigstens gegen elektromagnetische Störeinflüsse von unten abschirmt.

In dem hier dargestellten Ausführungsbeispiel ist in einem Randabschnitt 12 die Wandung 10 des Abschirmkörper 8 im Wesentlichen um 90° abgekantet, um hier eine im Abschirmkörper 8 angeordnete elektronische Baugruppe 9 auch vor seitlichen elektromagnetischen Störeinflüssen zu schützen.

In Figur 3 sind rein schematisch mehrere Ausführungsbeispiele von Abschirmkörpern 8 für ein erfindungsgemäßes Kochgeschirr 1 jeweils in einer Schnittansicht von der Seite dargestellt.

In dem linken Ausführungsbeispiel umfasst der Abschirmkörper 8 eine Wandung 10. Der Abschirmkörper 8 ist hier im Wesentlichen schalenförmig ausgeführt und weist hier einen im Wesentlichen U-förmig ausgeformten vertikalen Querschnitt 11 auf.

Auch in dem mittleren Ausführungsbeispiel umfasst der Abschirmkörper 8 eine Wandung 10, wobei hier der Abschirmkörper 8 als ein Abschirmgehäuse 13 ausgeführt ist, in welchem hier eine elektrische Baugruppe 9 so anordenbar ist, dass das Abschirmgehäuse die elektrische Baugruppe 9 im Wesentlichen umschließt.

In dem rechten Ausführungsbeispiel ist der Abschirmkörper 8 als ein zweiteiliges Abschirmgehäuse 13 mit zwei zeitweise separierbaren Abschirmgehäuseelementen ausgeführt. Die hier rein schematisch dargestellten Abschirmgehäuseelemente weisen jeweils eine Wandung 10 auf und sind hier so anordenbar, dass sie in einer Einbaulage eine elektronische Baugruppe 9 im Wesentlichen umschließen.

Jedes der in Figur 3 rein schematisch dargestellten Ausführungen eines Abschirmkörpers 8 ist hier dazu geeignet und ausgeführt eine elektronische Baugruppe 9 im Wesentlichen vor elektromagnetischen Störeinflüssen abzuschirmen und/oder zu schützen.

### Bezugszeichenliste

- 1: Kochgeschirr
- 2: Kochgeschirrgrundkörper
- 3: Griffeinrichtung
- 4: Griffkörper
- 5: Boden
- 6: Wandung
- 7: Aufnahmevolumen
- 8: Abschirmkörper
- 9: elektronische Baugruppe
- 10: Wandung
- 11: Querschnitt
- 12: Randabschnitt
- 13: Abschirmgehäuse
- 15: Dichtelement
- 16: Batterieelement
- 17: Auswerteeinrichtung

## Patentansprüche

1. Kochgeschirr (1) umfassend wenigstens einen Kochgeschirrgrundkörper (2) und wenigstens eine Griffeinrichtung (3) mit wenigstens einem Griffkörper (4), wobei die Griffeinrichtung (3) wenigstens abschnittsweise an dem Kochgeschirrgrundkörper (2) aufgenommen ist, wobei der Kochgeschirrgrundkörper (2) wenigstens einen Boden (5) und wenigstens eine Wandung (6) umfasst und wobei durch den Boden (5) und die Wandung (6) wenigstens ein Aufnahmevolumen (7) begrenzt wird,
wobei wenigstens ein Abschirmkörper (8) umfasst ist, welcher wenigstens abschnittsweise in und/oder von dem Griffkörper (4) eingefasst ist und welcher wenigstens eine in dem Abschirmkörper (8) angeordnete elektronische Baugruppe (9) im Wesentlichen vor elektromagnetischen Störeinflüssen abschirmt,
wobei die Griffeinrichtung (3) wenigstens ein Batterieelement (16) und/oder wenigstens eine Auswerteeinrichtung (17) umfasst,
die elektronische Baugruppe (9) wenigstens abschnittsweise und/oder wenigstens teilweise das Batterieelement (16) und/oder die Auswerteeinrichtung (17) umfasst.

2. Kochgeschirr (1) nach Anspruch 1, **dadurch gekennzeichnet, dass** der Abschirmkörper (8) wenigstens abschnittsweise aus Aluminium ausgebildet ist.

3. Kochgeschirr (1) nach einem der beiden vorhergehenden Ansprüche, **dadurch gekennzeichnet, dass** der Abschirmkörper (8) wenigstens eine Wandung (10) umfasst, welche wenigstens abschnittsweise eine Dicke von wenigstens 0,7 mm aufweist.

4. Kochgeschirr (1) nach einem der vorhergehenden Ansprüche, **dadurch gekennzeichnet, dass** der Abschirmkörper (8) wenigstens abschnittsweise schalenförmig ausgebildet ist und/oder einen im Wesentlichen U-förmig ausgeformten Querschnitt (11) aufweist.

5. Kochgeschirr (1) nach einem der vorhergehenden Ansprüche, **dadurch gekennzeichnet, dass** der Abschirmkörper (8) wenigstens in einem Randabschnitt (12) im Wesentlichen um 90° abgekantet ist.

6. Kochgeschirr (1) nach einem der vorhergehenden Ansprüche, **dadurch gekennzeichnet, dass** der Abschirmkörper (8) wenigstens ein Abschirmgehäuse (13) bereitstellt, welches die elektronische Baugruppe im Wesentlichen umschließt.

7. Kochgeschirr (1) nach einem der vorhergehenden Ansprüche, **dadurch gekennzeichnet, dass** der Abschirmkörper (8) dazu geeignet und ausgebildet ist, die elektronische Baugruppe (9) wenigstens zeitweise im Wesentlichen vor einer Erwärmung abzuschirmen.

8. Kochgeschirr (1) nach einem der vorhergehenden Ansprüche, **dadurch gekennzeichnet, dass** die Griffeinrichtung (3) wenigstens ein Abdeckelement zum Greifen des Kochgeschirrs (1) durch einen Benutzer umfasst, welches wenigstens abschnittsweise den Griffkörper (4), insbesondere den Abschirmkörper (8), abdeckt und/oder ummantelt.

9. Kochgeschirr (1) nach einem der vorhergehenden Ansprüche, **dadurch gekennzeichnet, dass** das Griffkörper (4) wenigstens abschnittsweise eine thermische Leitfähigkeit aufweist, welche im Wesentlichen gleich oder kleiner ist, als die thermische Leitfähigkeit von Edelstahl.

10. Kochgeschirr (1) nach einem der vorhergehenden Ansprüche, **dadurch gekennzeichnet, dass** der Griffkörper (4) und der Abschirmkörper (8) wenigstens abschnittsweise elektrisch leitend miteinander in Kontakt stehen.

11. Kochgeschirr (1) nach einem der vorhergehenden Ansprüche, **dadurch gekennzeichnet, dass** der Griffkörper (4) und der Abschirmkörper (8) wenigstens abschnittsweise mittels wenigstens einem, insbesondere elektrisch leitfähigen, Dichtelement (15) miteinander in Kontakt stehen.

12. Kochgeschirr (1) nach einem der vorhergehenden Ansprüche, **dadurch gekennzeichnet, dass** die Griffeinrichtung (3) wenigstens eine Kommunikationseinrichtung und/oder wenigstens eine Signaleinrichtung und/oder wenigstens ein Bedienelement umfasst.

13. Kochgeschirr (1) nach einem der vorhergehenden Ansprüche, **dadurch gekennzeichnet, dass** wenigstens eine Sensoreinrichtung umfasst ist, welche wenigstens zeitweise in Signalverbindung mit der elektronischen Baugruppe (9) steht.

## Claims

1. Cooking utensil (1) comprising at least one cooking utensil main body (2) and at least one handle device (3) having at least one handle body (4), wherein the handle device (3) is received, at least in portions, at the cooking utensil main body (2), wherein the cooking utensil main body (2) comprises at least a base (5) and at least a wall (6) and wherein at least a receiving volume (7) is delimited by the base (5) and the wall (6),
wherein at least a shield body (8) is comprised which is enclosed, at least in portions, in and/or by the handle body (4) and which substantially shields at least an electronic assembly (9) arranged in the shield body (8) against electromagnetic disturbances,
wherein the handle device (3) comprises at least a battery element (16) and/or at least an evaluation device (17),
the electronic assembly (9) comprises, at least in portions and/or at least in part, the battery element (16) and/or the evaluation unit (17).

2. Cooking utensil (1) according to claim 1, **characterised in that** the shield body (8) is, at least in portions, made of aluminium.

3. Cooking utensil (1) according to either of the two preceding claims, **characterised in that** the shield body (8) comprises at least a wall (10) which has, at least in portions, a thickness of at least 0.7 mm.

4. Cooking utensil (1) according to any of the preceding claims,
**characterised in that** the shield body (8), at least in portions, is bowl shaped and/or has a substantially U-shaped cross-section (11).

5. Cooking utensil (1) according to any of the preceding claims,
**characterised in that** the shield body (8) is bent substantially by 90° at least in one edge portion (12).

6. Cooking utensil (1) according to any of the preceding claims,
**characterised in that** the shield body (8) provides at least a shield housing (13) which substantially surrounds the electronic assembly.

7. Cooking utensil (1) according to any of the preceding claims,
**characterised in that** the shield body (8) is suitable and designed to substantially shield the electronic assembly (9), at least temporarily, from an increase in temperature.

8. Cooking utensil (1) according to any of the preceding claims,
**characterised in that** the handle device (3) comprises at least a cover element for gripping of the cooking utensil (1) by a user, which cover element, at least in portions, covers and/or encases the handle body (4), in particular the shield body (8).

9. Cooking utensil (1) according to any of the preceding claims,
**characterised in that** the handle body (4) has, at least in portions, a thermal conductivity which is substantially equal to or less than the thermal conductivity of stainless steel.

10. Cooking utensil (1) according to any of the preceding claims,
**characterised in that** the handle body (4) and the shield body (8) are in contact with one another, at least in portions, in an electrically conductive manner.

11. Cooking utensil (1) according to any of the preceding claims,
**characterised in that** the handle body (4) and the shield body (8) are in contact with one another, at least in portions, by means of at least a, in particular electrically conductive, sealing element (15).

12. Cooking utensil (1) according to any of the preceding claims,
**characterised in that** the handle device (3) comprises at least a communication device and/or at least a signal device and/or at least a control element.

13. Cooking utensil (1) according to any of the preceding claims,
**characterised in that** at least a sensor device is comprised which is, at least temporarily, in signal connection with the electronic assembly (9).

## Revendications

1. Ustensile de cuisson (1) comprenant au moins un corps de base d'ustensile de cuisson (2) et au moins un dispositif de préhension (3) comportant au moins un corps de préhension (4), dans lequel le dispositif de préhension (3) est reçu, au moins dans certaines sections, sur le corps de base d'ustensile de cuisson (2), dans lequel le corps de base d'ustensile de cuisson (2) comprend au moins un fond (5) et au moins une paroi (6), et dans lequel au moins un volume de réception (7) est délimité par le fond (5) et la paroi (6),
dans lequel au moins un corps de protection (8) est compris, lequel est encadré, au moins dans certaines sections, dans le corps de préhension (4) et/ou par celui-ci et lequel protège au moins un bloc électronique (9) sensiblement contre les influences perturbatrices électromagnétiques, lequel bloc électronique est disposé dans le corps de protection (8),
dans lequel le dispositif de préhension (3) comprend au moins un élément formant batterie (16) et/ou au moins un dispositif d'évaluation (17),
le bloc électronique (9) comprend, au moins dans certaines sections et/ou au moins en partie, l'élément formant batterie (16) et/ou le dispositif d'évaluation (17).

2. Ustensile de cuisson (1) selon la revendication 1, **caractérisé en ce que** le corps de protection (8) est réalisé, au moins dans certaines sections, en aluminium.

3. Ustensile de cuisson (1) selon l'une des deux revendications précédentes, **caractérisé en ce que** le corps de protection (8) comprend au moins une paroi (10) qui présente, au moins dans certaines sections, une épaisseur d'au moins 0,7 mm.

4. Ustensile de cuisson (1) selon l'une des revendications précédentes, **caractérisé en ce que** le corps de protection (8) est réalisé, au moins dans certaines sections, sous forme de coque et/ou présente une section transversale (11) formée sensiblement en forme de U.

5. Ustensile de cuisson (1) selon l'une des revendications précédentes, **caractérisé en ce que** le corps de protection (8) est replié sensiblement à 90° au moins dans une section formant bord (12).

6. Ustensile de cuisson (1) selon l'une des revendications précédentes, **caractérisé en ce que** le corps de protection (8) fournit au moins un boîtier de protection (13) qui entoure sensiblement le bloc électronique.

7. Ustensile de cuisson (1) selon l'une des revendications précédentes, **caractérisé en ce que** le corps de protection (8) est adapté et conçu pour protéger le bloc électronique (9), au moins temporairement, sensiblement contre l'échauffement.

8. Ustensile de cuisson (1) selon l'une des revendications précédentes, **caractérisé en ce que** le dispositif de préhension (3) comprend au moins un élément de recouvrement pour la préhension de l'ustensile de cuisson (1) par un utilisateur, lequel élément de recouvrement recouvre et/ou enveloppe, au moins dans certaines sections, le corps de préhension (4), en particulier le corps de protection (8).

9. Ustensile de cuisson (1) selon l'une des revendications précédentes, **caractérisé en ce que** le corps de préhension (4) présente, au moins dans certaines sections, une conductivité thermique qui est sensiblement égale ou inférieure à la conductivité thermique de l'acier inoxydable.

10. Ustensile de cuisson (1) selon l'une des revendications précédentes, **caractérisé en ce que** le corps de préhension (4) et le corps de protection (8) sont, au moins dans certaines sections, en contact l'un avec l'autre d'une manière électriquement conductrice.

11. Ustensile de cuisson (1) selon l'une des revendications précédentes, **caractérisé en ce que** le corps de préhension (4) et le corps de protection (8) sont, au moins dans certaines sections, en contact l'un avec l'autre au moyen d'au moins un élément d'étanchéité (15), en particulier électriquement conducteur.

12. Ustensile de cuisson (1) selon l'une des revendications précédentes, **caractérisé en ce que** le dispositif de préhension (3) comprend au moins un dispositif de communication et/ou au moins un dispositif de signalisation et/ou au moins un élément de commande.

13. Ustensile de cuisson (1) selon l'une des revendications précédentes, **caractérisé en ce qu'**au moins un dispositif de détection est compris, lequel est au moins temporairement en liaison de signalisation avec le bloc électronique (9).
